# EUROPEAN PATENT APPLICATION

(11) **EP 4 542 796 A1**
(43) Date of publication of application: **23.04.2025**
(21) Application number: 23823664.0
(22) Date of filing: 26.05.2023
(51) Int. Cl.: H01S 3/13, H01S 3/00, H01S 3/23

(54) **LASER DEVICE**

(30) Priority: 14.06.2022 JP 2022095868
(71) Applicant: Panasonic Intellectual Property Management Co., Ltd., Kadoma-shi, Osaka 571-0057 (JP)
(72) Inventor: NAKAMURA, Tasuku, Kadoma-shi, Osaka 571-0057 (JP); OKAMOTO, Shinya, Kadoma-shi, Osaka 571-0057 (JP); HISADA, Kazuya, Kadoma-shi, Osaka 571-0057 (JP); INADA, Yasuhisa, Kadoma-shi, Osaka 571-0057 (JP); NOZAWA, Katsuya, Kadoma-shi, Osaka 571-0057 (JP)
(74) Representative: Grünecker Patent- und Rechtsanwälte PartG mbB
(86) International application number: PCT/JP2023/019655
(87) International publication number: WO 2023/243365

(57) **Abstract**

A laser device (100) includes a first optical comb laser (10), a second optical comb laser (20) having a repetition frequency different from the first optical comb laser (10), a detection unit (70) that detects interfering light between light output from the first optical comb laser (10) and light output from the second optical comb laser (20) and a control circuit (90). The control circuit (90) controls at least one of a first CEO frequency, which is a carrier-envelope offset frequency of the first optical comb laser (10), or a second CEO frequency, which is a carrier-envelope offset frequency of the second optical comb laser (20), on the basis of output of the detection unit (70) and thus changes a difference frequency, which is a difference between the first CEO frequency and the second CEO frequency.

## Description

### Technical Field

The present disclosure relates to a laser device.

### Background Art

Conventionally, a laser light source called an optical frequency comb laser or simply called an optical comb laser is known. Specifically, the optical frequency comb laser is a light source that outputs laser light in which pulse waveforms are arranged at equal intervals on a time axis and spectra are arranged at equal intervals on a frequency axis.

Patent Literature 1 discloses a coherent dual scanning laser system that performs control so that a difference between carrier-envelope offset frequencies (f_{CEO}) of two oscillators is stabilized. Furthermore, Patent Literature 2 discloses a method for controlling an optical comb so that a difference between carrier-envelope offset frequencies (f_{CEO}) of two oscillators becomes an integral multiple of a repetition frequency (fᵣₑₚ).

### Citation List

### Patent Literature

PTL 1: Japanese Patent No. 5663499
PTL 2: Japanese Patent No. 6963322

### Summary of Invention

However, in some cases, output light cannot be detected with high accuracy by a detector just by stabilizing a difference between carrier-envelope offset frequencies as in the above conventional arts.

The present disclosure provides a laser device that outputs light that can be detected with high accuracy by a detector.

A laser device according to an aspect of the present disclosure includes a first optical comb laser; a second optical comb laser having a repetition frequency different from the first optical comb laser; a detection unit that detects interfering light between light output from the first optical comb laser and light output from the second optical comb laser; and a control circuit, in which the control circuit controls at least one of a first CEO frequency, which is a carrier-envelope offset frequency of the first optical comb laser, or a second CEO frequency, which is a carrier-envelope offset frequency of the second optical comb laser, on the basis of output of the detection unit and thus changes a difference frequency, which is a difference between the first CEO frequency and the second CEO frequency.

According to the present disclosure, it is possible to provide a laser device that outputs light that can be detected with high accuracy by a detector.

### Brief Description of Drawings

[Fig. 1] Fig. 1 schematically illustrates a temporal change of an electric field of optical comb laser light.
[Fig. 2] Fig. 2 schematically illustrates a frequency spectrum of optical comb laser light.
[Fig. 3] Fig. 3 schematically illustrates frequency spectra of two beams of optical comb laser light in dual comb.
[Fig. 4] Fig. 4 schematically illustrates a frequency spectrum after interference in dual comb.
[Fig. 5] Fig. 5 schematically illustrates an example of a laser device according to an embodiment.
[Fig. 6] Fig. 6 is a flowchart illustrating processing for controlling δf_{CEO} on the basis of a lowest frequency mode in a frequency spectrum of a dual-comb signal in operation of the laser device according to the embodiment.
[Fig. 7] Fig. 7 illustrates an inappropriate example of a frequency spectrum of a dual-comb signal.
[Fig. 8] Fig. 8 is a flowchart illustrating processing for controlling δf_{CEO} on the basis of a highest frequency mode in a frequency spectrum of a dual-comb signal in operation of the laser device according to the embodiment.
[Fig. 9] Fig. 9 illustrates an inappropriate example of a frequency spectrum of a dual-comb signal.
[Fig. 10] Fig. 10 is a flowchart illustrating processing for controlling δf_{CEO} on the basis of a frequency interval in a frequency spectrum of a dual-comb signal in operation of the laser device according to the embodiment.
[Fig. 11] Fig. 11 illustrates an inappropriate example of a frequency spectrum of a dual-comb signal.
[Fig. 12] Fig. 12 is a flowchart illustrating processing for controlling δf_{CEO} on the basis of a frequency spectrum of a dual-comb signal in operation of the laser device according to the embodiment.
[Fig. 13] Fig. 13 is a flowchart illustrating an example of processing for controlling δf_{CEO} on the basis of accuracy of a distance calculated from a dual-comb signal in operation of the laser device according to the embodiment.
[Fig. 14] Fig. 14 is a flowchart illustrating an example of processing for controlling δf_{CEO} as calibration before measurement in operation of the laser device according to the embodiment.
[Fig. 15] Fig. 15 is a flowchart illustrating an example of processing for controlling δf_{CEO} as occasional feedback in operation of the laser device according to the embodiment.
[Fig. 16] Fig. 16 illustrates a flow of processing of a modification.

### Description of Embodiments

### (Outline of Present Disclosure)

In an optical comb laser, two parameters are important. One parameter is a "repetition frequency" (fᵣₑₚ), which is a spectral interval. The other parameter is a "carrier-envelope offset frequency" (f_{CEO}), which is a remainder obtained when a spectrum is extrapolated to 0. These parameters slightly change due to disturbances such as vibration and temperature. These parameters can be stabilized by incorporating a modulator such as a Peltier element or a piezoelectric element into an optical comb laser. This can realize precise measurement.

A measurement method of preparing two optical comb lasers, slightly shifting repetition frequencies of the optical comb lasers from each other, and causing the repetition frequencies to interfere with each other is called dual comb. In the dual comb, two optical comb lasers whose repetition frequencies are fᵣₑₚ and fᵣₑₚ + δfᵣₑₚ interfere with each other, and thereby a beat is generated. As a result, a spectrum whose interval is δfᵣₑₚ can be acquired. What is important here is that spectra of the optical comb lasers before the interference are in a THz region, which is a frequency of light, and the spectrum after the interference is in an MHz region of a radio frequency.

A conventional detector cannot physically detect a signal of light in a THz region since a response frequency is GHz or less. Therefore, conventionally, a detector cannot be directly used to examine a wavelength of light, and instead light is divided into wavelengths by a spectrometer and is then detected by a detector. This has a disadvantage that a spectrum cannot be measured in a short time since it takes time to sweep a wavelength.

On the other hand, in the case of dual comb, a spectrometer is not needed since light can be down-converted to a MHz region. This has an advantage that a spectrum can be measured speedily, as compared with the conventional arts. In addition, information on light can be directly measured, and therefore high-sensitivity and high-accuracy measurement can be realized. For this reason, the dual comb is used in a wide variety of measurement such as spectrometry, distance measurement, and frequency measurement.

However, even in a case where the dual comb is used, it is sometimes difficult to perform measurement in a case where an inexpensive detector having a narrow response frequency band is used since the response frequency band is exceeded depending on a value of δf_{CEO}, which is a difference between carrier-envelope offset frequencies f_{CEO} of two optical comb lasers.

A laser device according to an aspect of the present disclosure includes a first optical comb laser; a second optical comb laser having a repetition frequency different from the first optical comb laser; a detection unit that detects interfering light between light output from the first optical comb laser and light output from the second optical comb laser; and a control circuit, in which the control circuit controls at least one of a first CEO frequency, which is a carrier-envelope offset frequency of the first optical comb laser, or a second CEO frequency, which is a carrier-envelope offset frequency of the second optical comb laser, on a basis of output of the detection unit and thus changes a difference frequency, which is a difference between the first CEO frequency and the second CEO frequency.

With this configuration, the difference frequency (δf_{CEO}) can be adjusted to fall within a response frequency band of the detection unit by using the output of the detection unit that detects the interfering light. It is therefore possible to perform detection with high accuracy even in a case where a detector having a narrow response frequency band is used.

The laser device according to the aspect of the present disclosure may be, for example, configured such that the control circuit acquires first information concerning a lowest frequency mode of a frequency spectrum of the interfering light on the basis of the output of the detection unit and increases the difference frequency by using the acquired first information.

With this configuration, the lowest frequency mode can be detected in an appropriate range within the response frequency band. This can suppress a decrease in detection accuracy occurring due to occurrence of aliasing or the like.

The laser device according to the aspect of the present disclosure may be, for example, configured such that the control circuit acquires second information concerning a highest frequency mode of a frequency spectrum of the interfering light on the basis of the output of the detection unit and decreases the difference frequency by using the acquired second information.

With this configuration, the highest frequency mode can be detected in an appropriate range within the response frequency band. This can suppress a decrease in detection accuracy occurring due to occurrence of aliasing or the like.

The laser device according to the aspect of the present disclosure may be, for example, configured such that the control circuit acquires third information concerning a frequency interval of a frequency spectrum of the interfering light on the basis of the output of the detection unit and changes the difference frequency by using the acquired third information.

With this configuration, whether or not aliasing is occurring can be detected. Therefore, in a case where aliasing is occurring, the frequency spectrum of the interfering light can be adjusted to fall within the response frequency band, and a decrease in detection accuracy can be suppressed.

The laser device according to the aspect of the present disclosure may be, for example, configured to further include a signal processing circuit that calculates a distance to a target on the basis of output of the detection unit, in which the detection unit detects interfering light between light output from the first optical comb laser and reflected by the target and light output from the second optical comb laser.

With this configuration, measurement of a distance to a target, inspection of a shape of a target, and the like can be performed with high accuracy.

The laser device according to the aspect of the present disclosure may be, for example, configured such that the control circuit changes the difference frequency on the basis of accuracy of the distance calculated by the signal processing circuit.

With this configuration, accuracy of a distance can be increased.

The laser device according to the aspect of the present disclosure may be, for example, configured such that the control circuit changes the difference frequency before the calculation of the distance.

With this configuration, calibration of the difference frequency (δf_{CEO}) can be performed, and therefore measurement can be performed with high accuracy from the start.

The laser device according to the aspect of the present disclosure may be, for example, configured such that the control circuit changes the difference frequency while calculating the distance.

With this configuration, feedback of the difference frequency (δf_{CEO}) can be performed, and therefore accuracy can be increased while performing measurement. Note that "while calculating the distance" means that calculation of the distance and the change of the difference frequency are performed substantially concurrently. For example, "while calculating the distance" means not only a case where the calculation of the distance and the change of the difference frequency are performed completely concurrently, but also a case where the calculation of the distance and the change of the difference frequency are performed alternately. The case where the calculation of the distance and the change of the difference frequency are performed alternately encompasses not only a case where the calculation of the distance and the change of the difference frequency are performed one after another in a repeated pattern, but also a case where one processing is performed plural times and then the other processing is performed once.

A laser device according to an aspect of the present disclosure may be provided by combining constituent elements of the laser devices according to the aspects described above as appropriate.

An embodiment is specifically described below with reference to the drawings.

An embodiment described below is a general or specific example. Numerical values, shapes, materials, constituent elements, the way in which the constituent elements are disposed and connected, steps, the order of steps, and the like in the embodiment below are examples and do not limit the present disclosure. Among constituent elements in the embodiment below, constituent elements that are not described in independent claims are described as optional constituent elements.

Each drawing is a schematic view and is not necessarily strict illustration. Therefore, for example, scales in the drawings do not necessarily match. In the drawings, substantially identical constituent elements are given identical reference signs, and repeated description thereof is omitted or simplified.

In the present specification, ordinal numbers such as "first" and "second" do not mean the number constituent elements or an order of constituent elements, and are used to distinguish constituent elements of the same kind and avoid confusion, unless otherwise specified.

### (Embodiment)

### [Optical Comb Laser]

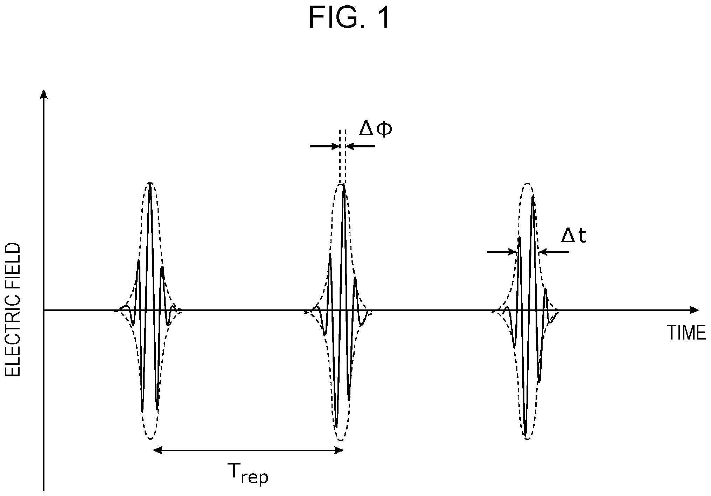

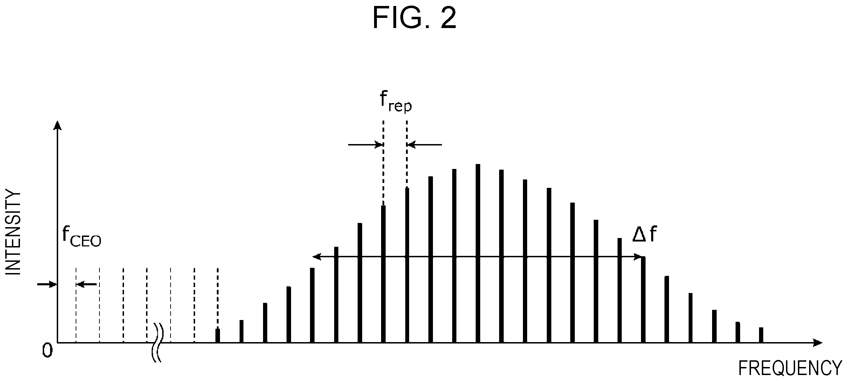

First, a basic principle of an optical comb laser is briefly described with reference to FIGS. 1 and 2.

Fig. 1 schematically illustrates an example of a temporal change of an electric field of optical comb laser light. In Fig. 1, the horizontal axis represents time, and the vertical axis represents an electric field of optical comb laser light. Note that the optical comb laser light is also called optical frequency comb laser light. In the present specification, the optical comb laser light is sometimes simply referred to as laser light.

As illustrated in Fig. 1, the optical comb laser light is a sequence of optical pulses that occur every repetition period Tᵣₑₚ. The repetition period Tᵣₑₚ is, for example, greater than or equal to 1 ps and less than or equal to 100 ns. A full width at half maximum of each optical pulse is expressed by Δt. The full width at half maximum Δt of each optical pulse is, for example, greater than or equal to 10 fs and less than or equal to 100 ps.

In a laser resonator, a group velocity v_{g} at which an envelope of an optical pulse propagates and a phase velocity vₚ at which a wave in the optical pulse propagates take different values, for example, due to dispersion in the resonator. Due to the difference between the group velocity v_{g} and the phase velocity vₚ, when two adjacent optical pulses are superimposed so that envelopes match, phases of waves in these optical pulses are shifted by Δφ. Δφ takes a value between 0 and 2π. That is, 0 ≤ Δφ ≤ 2π. The repetition period of the optical pulse sequence is expressed as Tᵣₑₚ = L / v_{g} where L is a round-trip length of the laser resonator.

Fig. 2 schematically illustrates a frequency spectrum of the optical comb laser light. In Fig. 2, the horizontal axis represents a frequency, and the vertical axis represents an intensity of the optical comb laser light.

As illustrated in Fig. 2, the optical comb laser light has a comb-shaped frequency spectrum formed from plural discrete equally-spaced lines. A frequency of the plural discrete equally-spaced lines corresponds to a resonant frequency of a laser resonator in a vertical mode. A repetition frequency corresponding to an interval between two adjacent equally-spaced lines of the optical comb laser light is expressed as fᵣₑₚ = 1 / Tᵣₑₚ. The repetition frequency fᵣₑₚ is, for example, greater than or equal to 10 MHz and less than or equal to 1 THz. In a case where the round-trip length of the laser resonator is 30 cm and the group velocity v_{g} is almost equal to light speed (= 3 × 10⁸ m/s) in vacuum, the repetition period Tᵣₑₚ is 1 ns, and the repetition frequency fᵣₑₚ is 1 GHz.

In a case where the full width at half maximum of the optical comb laser light is expressed as Δf, Δf = 1 / Δt. The full width at half maximum Δf of the optical comb laser light is, for example, greater than or equal to 10 GHz and less than or equal to 100 THz. Assume that the equally-spaced lines exist close to a zero frequency, a frequency of an equally-spaced line closest to the zero frequency is called a carrier-envelope offset frequency. The carrier-envelope offset frequency is expressed as f_{CEO} = (Δφ / (2π))fᵣₑₚ. The carrier-envelope offset frequency f_{CEO} takes a value between 0 and the repetition frequency fᵣₑₚ. That is, 0 ≤ f_{CEO} ≤ fᵣₑₚ. When the carrier-envelope offset frequency f_{CEO} is regarded as a 0-th mode frequency, an n-th mode frequency fₙ of the optical comb laser light is expressed as fₙ = f_{CEO} + nfᵣₑₚ. The electric field of the optical comb laser light illustrated in Fig. 1 is expressed as E(t) = ΣnEₙexp[-i(2πfₙt + φₙ)] where Eₙ and φₙ are an amplitude and a phase of the electric field at the n-th mode frequency fₙ, respectively.

The repetition frequency fᵣₑₚ and the carrier-envelope offset frequency f_{CEO} can slightly change due to disturbance such as vibration or temperature change which an optical comb laser light source undergoes. This is because the vibration can change the round-trip length L of the laser resonator and the temperature change can change the group velocity v_{g} and the phase velocity vₚ through change of a refractive index of the laser resonator. The repetition frequency fᵣₑₚ and the carrier-envelope offset frequency f_{CEO} are far lower than a frequency of light. Even a slight change of these frequencies can influence specifying a mode frequency of the optical comb laser light. In view of this, in a conventional optical comb laser light source, a modulation element for stabilizing the repetition frequency fᵣₑₚ and the carrier-envelope offset frequency f_{CEO} is incorporated.

The modulation element includes a piezoelectric element, such as a piezo element, for suppressing vibration and/or a temperature adjustment element, such as a Peltier device, for suppressing a change in temperature. The modulation element may be provided outside the optical comb laser light source. To stabilize the repetition frequency fᵣₑₚ, part of the optical comb laser light is detected, and feedback is performed so that the round-trip length L of the laser resonator becomes constant on the basis of the detected part by using the piezo element and the Peltier device. To stabilize the carrier-envelope offset frequency f_{CEO}, part of the optical comb laser light is detected by using a non-linear optical effect, and feedback is performed so that non-linearity in the laser resonator becomes constant by adjusting an intensity of excitation light input to the laser resonator on the basis of the detected part.

### [Dual Comb]

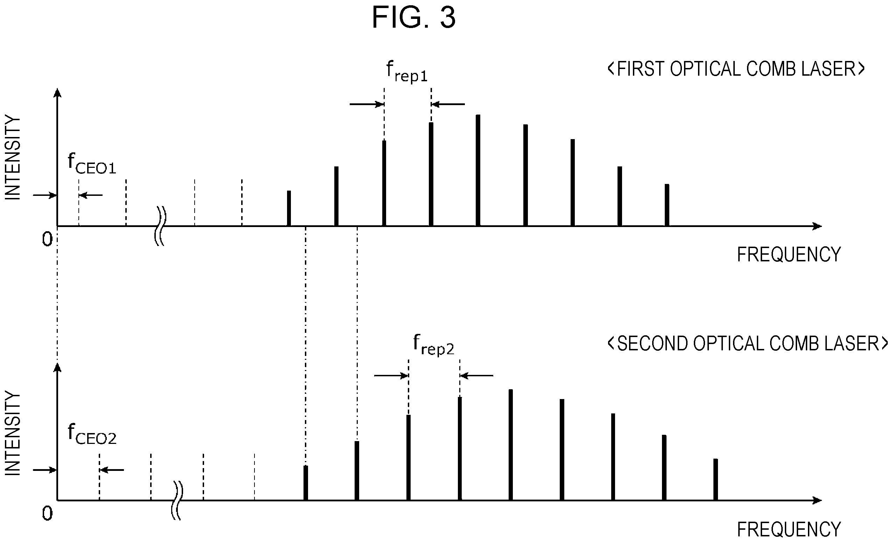

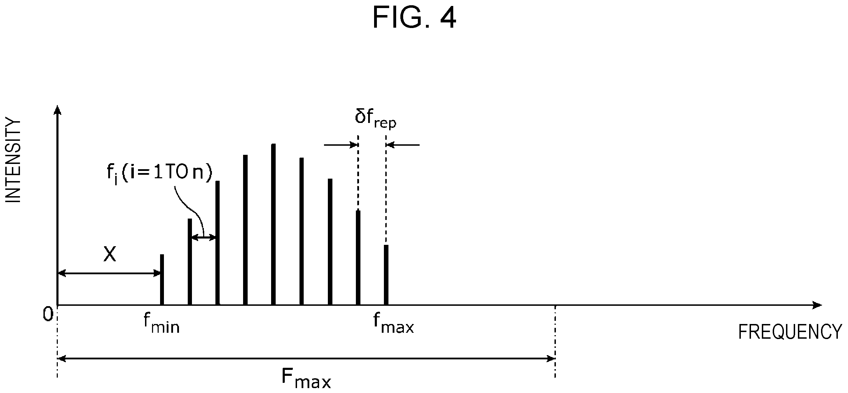

Next, a principle of dual comb is briefly described with reference to Figs. 3 and 4.

Fig. 3 illustrates a frequency spectrum of a first optical comb laser and a frequency spectrum of a second optical comb laser in dual comb. In the first optical comb laser light, an n-th mode frequency f₁ₙ is expressed as f₁ₙ = f_{CEO1} + nfᵣₑₚ₁. In the second optical comb laser light, an n-th mode frequency f₂ₙ is expressed as f₂ₙ = f_{CEO2} + nfᵣₑₚ₂. f_{CEO1} is an example of a first CEO frequency and is a carrier-envelope offset frequency of the first optical comb laser. f_{CEO2} is an example of a second CEO frequency and is a carrier-envelope offset frequency of the second optical comb laser. fᵣₑₚ₁ is a repetition frequency of the first optical comb laser. fᵣₑₚ₂ is a repetition frequency of the second optical comb laser. fᵣₑₚ₁ and fᵣₑₚ₂ are different from each other, and a relationship fᵣₑₚ₂ = fᵣₑₚ₁ + δfᵣₑₚ is established. δfᵣₑₚ is far smaller than fᵣₑₚ₁. δfᵣₑₚ is, for example, greater than or equal to 1 Hz and less than or equal to 10 MHz.

Fig. 4 schematically illustrates a frequency spectrum of interfering light in dual comb. A frequency spectrum like the one illustrated in Fig. 4 is detected as a result of interference between closest frequency modes of the first optical comb laser and the second optical comb laser of Fig. 3. This frequency spectrum of the interfering light is also referred to as a dual-comb signal.

A frequency interval of the frequency spectrum of the interfering light is δfᵣₑₚ, which is a difference between the repetition frequency of the first optical comb laser and the repetition frequency of the second optical comb laser. X in Fig. 4 represents a value from 0 to a lowest frequency mode. Fₘₐₓ represents a response frequency band of a detector. In a case where the frequency spectrum of the interfering light is within Fₘₐₓ as illustrated in Fig. 4, detection of the dual-comb signal is appropriate, and can be used for various uses such as distance measurement. The response frequency band of the detector may be interpreted as a frequency band that can be detected by the detector. In Fig. 4, δfᵣₑₚ may be the same as any fi. δfᵣₑₚ = (f₁ + ... + Fₙ)/n may be established. A minimum value of the response frequency band of the detector may be zero. The minimum value of the response frequency band of the detector may be a value other than zero.

It is assumed here that the lowest frequency mode is one obtained as a result of interference between an i-th frequency mode f₁ᵢ of the first optical comb laser and a j-th frequency mode f₂ⱼ of the second optical comb laser. In this case, X = f₂ⱼ - f₁ᵢ = (f_{CEO2} - f_{CEO1}) + (j - i)fᵣₑₚ + jδfᵣₑₚ.

For example, X = (f_{CEO2} - f_{CEO1}) + 506 MHz assume that fᵣₑₚ = 3 GHz, δfᵣₑₚ = 500 kHz, i = 65000, and j = 64989. Here, i and j are values in a case where a frequency of light is 195 THz. On the other hand, when the total number of modes is 200, a band of the frequency spectrum is 100 MHz (= δfᵣₑₚ × 200).

As described above, detection can be performed properly when Fₘₐₓ ≥ X + 100 MHz = δf_{CEO} + 606 MHz. Here, δf_{CEO} is an example of a difference frequency, which is a difference between the first CEO frequency and the second CEO frequency. Specifically, δf_{CEO} = f_{CEO2} - f_{CEO1} is satisfied. Since a maximum value of δf_{CEO} is approximately 3 GHz, a detector having a response frequency band of 3.6 GHz is needed in some cases.

**In** general, a detector having a high response frequency band exceeding 1 GHz is high in cost and becomes an obstacle in industrial application. The inventors of the present invention arrived at a laser device that can control δf_{CEO} so that detection of dual comb measurement can be performed even by an inexpensive detector having a low response frequency band.

### [Configuration of Laser Device]

A specific configuration of a laser device according to the embodiment of the present disclosure is described below.

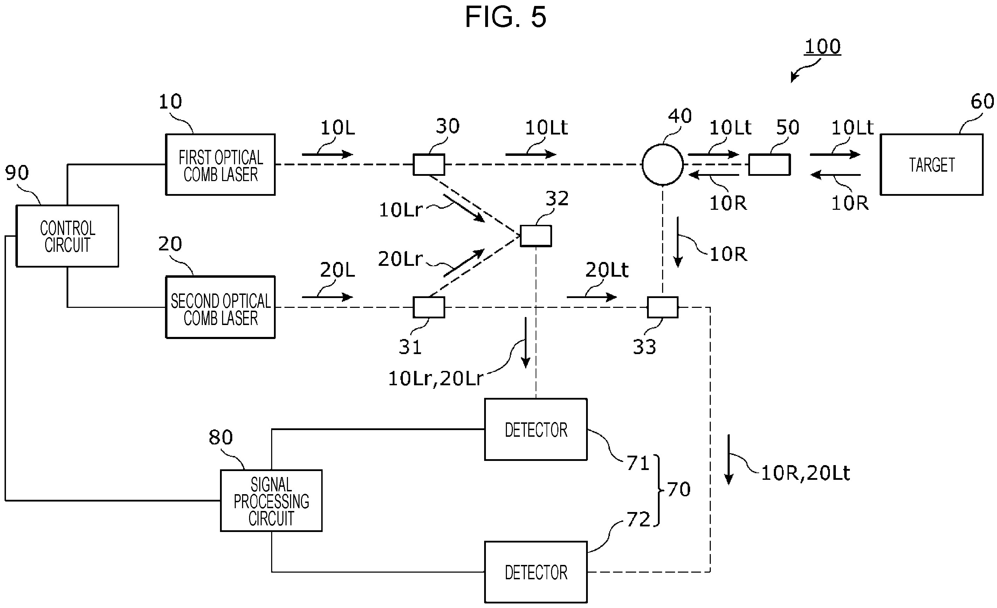

Fig. 5 schematically illustrates an example of the laser device according to the embodiment. First, an example of a basic configuration of a laser device 100 according to the embodiment of the present disclosure is described with reference to Fig. 5. The laser device 100 measures a distance to a target 60, that is, performs distance measurement. Alternatively, for example, the laser device 100 may inspect a shape of the target 60.

As illustrated in Fig. 5, the laser device 100 includes a first optical comb laser 10, a second optical comb laser 20, a detection unit 70, a signal processing circuit 80, and a control circuit 90. Furthermore, the laser device 100 includes, as optical elements for adjusting an optical path, couplers 30, 31, 32, and 33, a circulator 40, and a collimator 50.

The first optical comb laser 10 is an optical comb laser light source including a laser resonator. The first optical comb laser 10 outputs first optical comb laser light 10L as output light. The first optical comb laser light 10L is laser light whose repetition frequency is fᵣₑₚ₁ and whose carrier-envelope offset frequency is f_{CEO1}, for example, as illustrated in the upper stage of Fig. 3.

The second optical comb laser 20 is an optical comb laser light source including a laser resonator. The second optical comb laser 20 has a repetition frequency different from the first optical comb laser 10. The second optical comb laser 20 outputs second optical comb laser light 20L as output light. The second optical comb laser light 20L is laser light whose repetition frequency is fᵣₑₚ₂ and whose carrier-envelope offset frequency is f_{CEO2}, for example, as illustrated in the lower stage of Fig. 3.

The couplers 30, 31, 32, and 33 are optical elements that split or combine light.

The circulator 40 is an optical element that controls a traveling direction of light.

The collimator 50 is an optical element that turns light into parallel light and emits the parallel light. A light collecting element such as lens may be provided on a light emission side of the collimator 50.

The detection unit 70 includes detectors 71 and 72. The detectors 71 and 72 are optical elements that generate and output an electric signal by performing photoelectric conversion of incident light. A signal level of the electric signal corresponds to an intensity of the incident light. The detectors 71 and 72 are, for example, photoelectric conversion elements such as photodiodes or phototransistors.

The signal processing circuit 80 acquires information concerning a frequency spectrum of a dual-comb signal on the basis of output of the detection unit 70. The dual-comb signal is a frequency spectrum of interfering light and is, for example, the signal illustrated in Fig. 4. A specific example of information concerning the frequency spectrum will be described later. The signal processing circuit 80 may (1) transmit information corresponding to output of the detection unit 70 (i.e., an electric signal corresponding to interfering light) to a spectrum analyzer connected to the laser device 100 wirelessly or by wire and (2) receive a frequency spectrum corresponding to the output of the detection unit 70, that is, corresponding to the interfering light from the spectrum analyzer.

Furthermore, the signal processing circuit 80 calculates a distance to the target 60 on the basis of the output of the detection unit 70. The signal processing circuit 80 may calculate, for each portion of a surface of the target 60, a distance to the portion on the basis of the output of the detection unit 70. The signal processing circuit 80 can thus obtain information concerning a surface shape of the target 60.

The control circuit 90 changes δf_{CEO} by controlling at least one of f_{CEO1} or f_{CEO2} on the basis of the output of the detection unit 70. Specific processing of the control circuit 90 will be described later.

The signal processing circuit 80 and the control circuit 90 are each, for example, realized by a large scale integration (LSI), which is an integrated circuit (IC). Note that the integrated circuit is not limited to LSI and may be a dedicated circuit or a general-purpose processor. For example, the signal processing circuit 80 and the control circuit 90 may be microcontrollers. Each of the microcontrollers includes, for example, a non-volatile memory in which a program is stored, a volatile memory, which is a temporary storage region for executing a program, an input/output port, and a processor that executes a program. The signal processing circuit 80 and the control circuit 90 may be a Field Programmable Gate Array (FPGA) that can be programmed or a reconfigurable processor that allows reconfiguration of the connection or setup of circuit cells inside the LSI. Functions executed by the signal processing circuit 80 and the control circuit 90 may be realized by software or may be realized by hardware. The signal processing circuit 80 and the control circuit 90 may be realized by a common hardware configuration.

Next, a main connection relationship among the above constituent elements is described. Specifically, a connection relationship among the constituent elements concerning optical paths of the first optical comb laser light 10L and the second optical comb laser light 20L is described.

Many of the constituent elements of the laser device 100 are connected by an optical fiber indicated by the broken line in Fig. 5. Specifically, the couplers 30, 31, 32, and 33, the circulator 40, the collimator 50, and the detectors 71 and 72 are disposed on a path of the optical fiber. The first optical comb laser 10 and the second optical comb laser 20 are connected to end portions of the optical fiber.

The first optical comb laser light 10L is separated into light 10Lt and light 10Lr by the coupler 30. The light 10Lt is optical comb laser light for measurement and is emitted toward the target 60. The light 10Lr is optical comb laser light for reference.

The light 10Lt passes the circulator 40, is emitted from the collimator 50, and is then incident on the target 60. Then, the light 10Lt is reflected by the target 60. The light 10R reflected by the target 60 enters the collimator 50 and is then directed toward the coupler 33 by the circulator 40. The light 10Lr travels from the coupler 30 to the coupler 32.

On the other hand, the second optical comb laser light 20L is separated into light 20Lr and light 20Lt by the coupler 31. The light 20Lt is optical comb laser light for measurement. The light 20Lr is optical comb laser light for reference.

The light 20Lr is combined with the light 10Lr by the coupler 32 and travels toward the detector 71. The light 20Lt is combined with the reflected light 10R by the coupler 33 and travels toward the detector 72. These beams of light interfere at the detector 71 or 72, so that a beat is generated, and information on light is converted into an electric signal. The electric signal output from each of the detectors 71 and 72 is input to the signal processing circuit 80.

The signal processing circuit 80 calculates a distance to the target 60 by performing arithmetic processing while using the electric signal output from the detector 71 as a reference signal and using the electric signal output from the detector 72 as a measurement signal. The control circuit 90 changes the difference frequency δf_{CEO} by controlling a value of a carrier-envelope offset frequency of at least one of the first optical comb laser 10 or the second optical comb laser 20 on the basis of the electric signal output from the detector 71.

### [Specific Example of Control of δf_{CEO}

Next, a specific example of a method for controlling δf_{CEO} is described. The laser device 100 starts operation upon receipt of a start signal from an input unit (not illustrated). The input unit is, for example, a physical button or a touch panel display that can be operated by a user. Plural methods are available as a method for controlling δf_{CEO}. The following describes these methods in order.

### [Use of Lowest Frequency Mode]

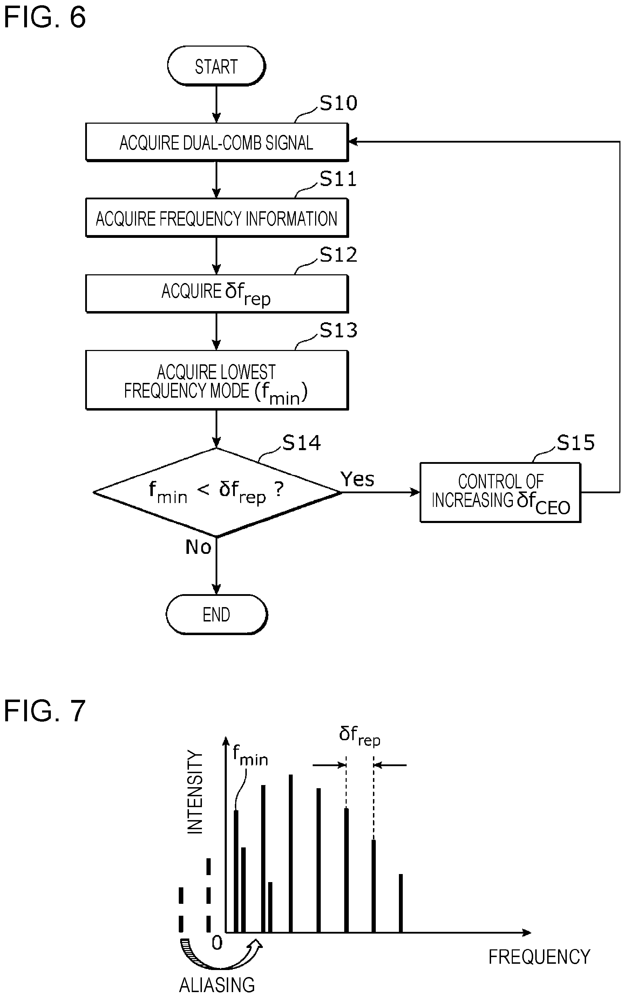

First, an example of using a lowest frequency mode is described with reference to Figs. 6 and 7.

Fig. 6 is a flowchart illustrating processing for controlling δf_{CEO} on the basis of a lowest frequency mode in a frequency spectrum of a dual-comb signal in operation of the laser device 100 according to the present embodiment.

In the processing illustrated in Fig. 6, control is performed so that X does not take a negative value in Fig. 4. If X takes a negative value, the frequency spectrum is folded at a value of 0 due to aliasing as illustrated in Fig. 7, so that a dual-comb signal cannot be appropriately detected. Fig. 7 illustrates an inappropriate example of a frequency spectrum of a dual-comb signal.

### (Step S10)

In step S10, the signal processing circuit 80 acquires a dual-comb signal detected by at least one of the detectors 71 and 72. The acquired dual-comb signal is time information of a pulse sequence such as the one illustrated in Fig. 1. Next, step S11 is performed.

### (Step S11)

In step S11, the signal processing circuit 80 acquires frequency information by converting the acquired time information. The acquired frequency information is a frequency spectrum of interfering light and is, for example, a frequency spectrum such as the one illustrated in Fig. 4. Although the signal processing circuit 80 performs fast Fourier transform as an example of computation used for the conversion, another method may be used as long as the time information can be converted into frequency information. The signal processing circuit 80 outputs the acquired frequency information to the control circuit 90. Next, step S12 is performed.

### (Step S12)

In step S12, the control circuit 90 acquires δfᵣₑₚ, which is a difference between the repetition frequencies. For example, in a case where the control circuit 90 controls the repetition frequency fᵣₑₚ₁ of the first optical comb laser 10 and the repetition frequency fᵣₑₚ₂ of the second optical comb laser 20, the control circuit 90 acquires δfᵣₑₚ (= fᵣₑₚ₂ - fᵣₑₚ₁) on the basis of this control information. Although one example of control of the repetition frequencies is to control resonator lengths of the first optical comb laser 10 and the second optical comb laser 20 by feedback control, another method may be used as long as the repetition frequencies can be controlled. Furthermore, a method different from the above method may be used as long as information on δfᵣₑₚ can be acquired. Next, step S13 is performed.

### (Step S13)

In step S13, the control circuit 90 acquires first information concerning a lowest frequency mode of the frequency spectrum acquired in step S12. Specifically, the first information is a mode frequency fₘᵢₙ of the lowest frequency mode. Although the control circuit 90 can detect fₘᵢₙ, for example, by performing peak detection on the frequency spectrum, another method can be used as long as fₘᵢₙ can be detected. Next, step S14 is performed.

### (Step S14)

In step S14, the control circuit 90 determines whether or not fₘᵢₙ is smaller than δfᵣₑₚ. In a case where fₘᵢₙ is smaller than δfᵣₑₚ in step S14, that is, in a case of Yes in step S14, step S15 is performed. On the other hand, in a case where fₘᵢₙ is equal to or larger than δfᵣₑₚ in step S14, that is, in a case of No in step S14, control of δf_{CEO} based on the lowest frequency mode is finished. In a case of No in step S14, δf_{CEO} need not be changed.

### (Step S15)

In step S15, the control circuit 90 changes δf_{CEO} by controlling at least one of f_{CEO1} of the first optical comb laser 10 or f_{CEO2} of the second optical comb laser 20. For example, the control circuit 90 changes at least one of f_{CEO1} or f_{CEO2} by adjusting output of an excitation source of the first optical comb laser 10 or the second optical comb laser 20. However, another method such as control using an acoustic optic modulator (AOM) may be used as long as a value of f_{CEO1} or f_{CEO2} can be changed. The processing returns to Step S10 after δf_{CEO} is changed, and the above processing is repeated.

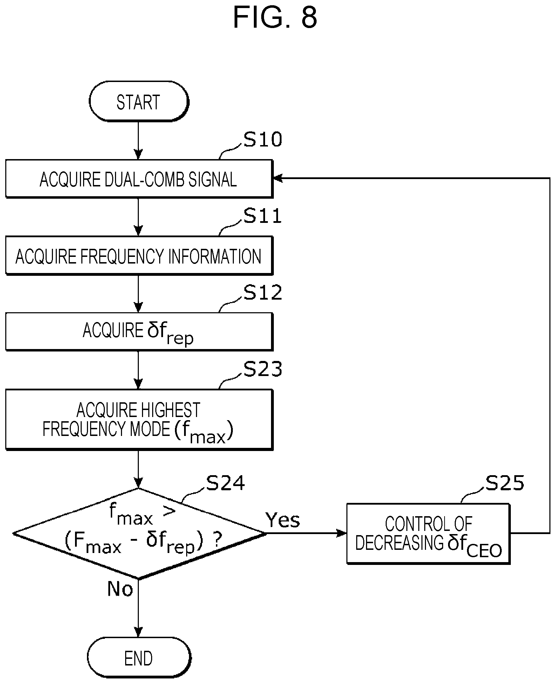

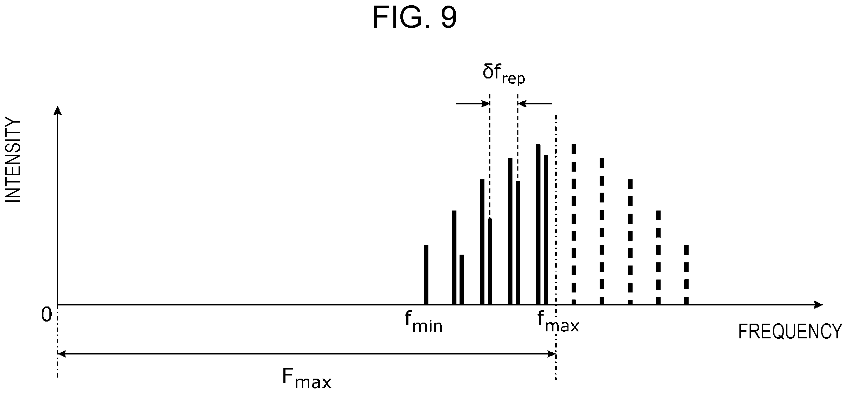

Fig. 7 illustrates an example in which X illustrated in Fig. 4 is a negative value and aliasing is occurring. Two frequency modes (indicated by the broken lines) having a negative mode frequency are detected at positions folded at a value of 0. In this case, the lowest frequency mode is the third frequency mode from the left in a case where aliasing is not occurring, as illustrated in Fig. 7. In this case, fₘᵢₙ < δfᵣₑₚ is satisfied (Yes in step S14), and therefore, the control circuit 90 increases δf_{CEO} by changing the value of f_{CEO1} or f_{CEO2}. An amount by which δf_{CEO} is increased is adjusted as appropriate. Note that in a case where δf_{CEO} is increased too much, a response frequency band is undesirably exceeded. How to deal with this problem is described later in detail with reference to Figs. 8 and 9.

In this way, the processing for increasing δf_{CEO} is repeated until there is no frequency mode having a negative mode frequency, that is, until fₘᵢₙ < δfᵣₑₚ ceases to be satisfied. This can suppress occurrence of aliasing that occurs because δf_{CEO} is too small.

In step S10, the signal processing circuit 80 may acquire dual-comb signals detected by the detectors 71 and 72. For example, in a case where a distance measurement result such as the one described later is used, the dual-comb signals detected by the detectors 71 and 72 are needed. In a case where the target 60 is moving at some degree of speed, there is a possibility that a position of the frequency spectrum is slightly shifted due to a Doppler effect of light. In view of this, the dual-comb signals of the detectors 71 and 72 may be acquired and the processes in steps S11 to S15 may be performed on each of the dual-comb signals so that aliasing is not generated in the detectors 71 and 72. The same applies to Figs. 8, 10, and 12.

### [Use of Highest Frequency Mode]

Next, an example of using a highest frequency mode is described with reference to Figs. 8 and 9.

Fig. 8 is a flowchart illustrating processing for controlling δf_{CEO} on the basis of a highest frequency mode in a frequency spectrum of a dual-comb signal in operation of the laser device 100 according to the present embodiment.

In the processing illustrated in Fig. 8, control is performed so that the frequency spectrum does not exceed a maximum value Fₘₐₓ of the response frequency band of the detectors 71 and 72 in Fig. 4. If the frequency spectrum exceeds the maximum value Fₘₐₓ of the response frequency band of the detectors 71 and 72, the frequency spectrum is folded at Fₘₐₓ due to aliasing as illustrated in Fig. 9, and as a result, a dual-comb signal cannot be appropriately detected. Note that Fig. 9 illustrates an inappropriate example of a frequency spectrum of a dual-comb signal.

The laser device 100 starts operation upon receipt of a start signal from the input unit (not illustrated). Steps S10, S11, and S12 are similar to those illustrated in Fig. 6, and therefore description thereof is omitted.

### (Step S23)

In step S23, the control circuit 90 acquires second information concerning a highest frequency mode of the frequency spectrum acquired in step S11. The second information is a mode frequency fₘₐₓ of the highest frequency mode. For example, the control circuit 90 can detect fₘₐₓ by performing peak detection on the frequency spectrum. However, another method may be used as long as fₘₐₓ can be detected. Next, step S24 is performed.

### (Step S24)

In step S24, the control circuit 90 determines whether or not fₘₐₓ is larger than Fₘₐₓ - δfᵣₑₚ. In a case where fₘₐₓ is larger than Fₘₐₓ - δfᵣₑₚ in step S24, that is, in a case of Yes in step S24, step S25 is performed. On the other hand, in a case where fₘₐₓ is equal to or smaller than Fₘₐₓ - δfᵣₑₚ in step S24, that is, in a case of No in step S24, control of δf_{CEO} based on the highest frequency mode is finished.

### (Step S25)

In step S25, the control circuit 90 changes δf_{CEO} by controlling at least one of f_{CEO1} of the first optical comb laser 10 or f_{CEO2} of the second optical comb laser 20. For example, the control circuit 90 changes at least one of f_{CEO1} or f_{CEO2} by adjusting output of an excitation source of the first optical comb laser 10 or the second optical comb laser 20. However, another method such as control using an AOM may be used as long as the value of f_{CEO1} or f_{CEO2} can be changed. The processing returns to step S10 after δf_{CEO} is changed, and the above processing is repeated. In a case of No in step S24, δf_{CEO} need not be changed.

Fig. 9 illustrates an example in which the frequency spectrum exceeds the maximum value Fₘₐₓ of the response frequency band and aliasing is occurring. Five frequency modes (indicated by the broken lines) having a mode frequency exceeding the maximum value Fₘₐₓ are detected at position folded at Fₘₐₓ. In this case, the highest frequency mode is the sixth frequency mode from the right in a case where aliasing is not occurring, as illustrated in Fig. 9. In this case, since fₘₐₓ > Fₘₐₓ - δfᵣₑₚ is satisfied (Yes in step S24), the control circuit 90 decrease δf_{CEO} by changing the value of f_{CEO1} or f_{CEO2}. An amount by which δf_{CEO} is decreased is adjusted as appropriate. Note that in a case where δf_{CEO} is made too small, X undesirably becomes a negative value. How to deal with this problem has been described with reference to Figs. 6 and 7.

In this way, the processing for decreasing δf_{CEO} is repeated until the frequency spectrum entirely falls within the response frequency band, that is, until fₘₐₓ > Fₘₐₓ - δfᵣₑₚ ceases to be satisfied. This can suppress occurrence of aliasing that occurs because δf_{CEO} is too large.

### [Use of Frequency Interval]

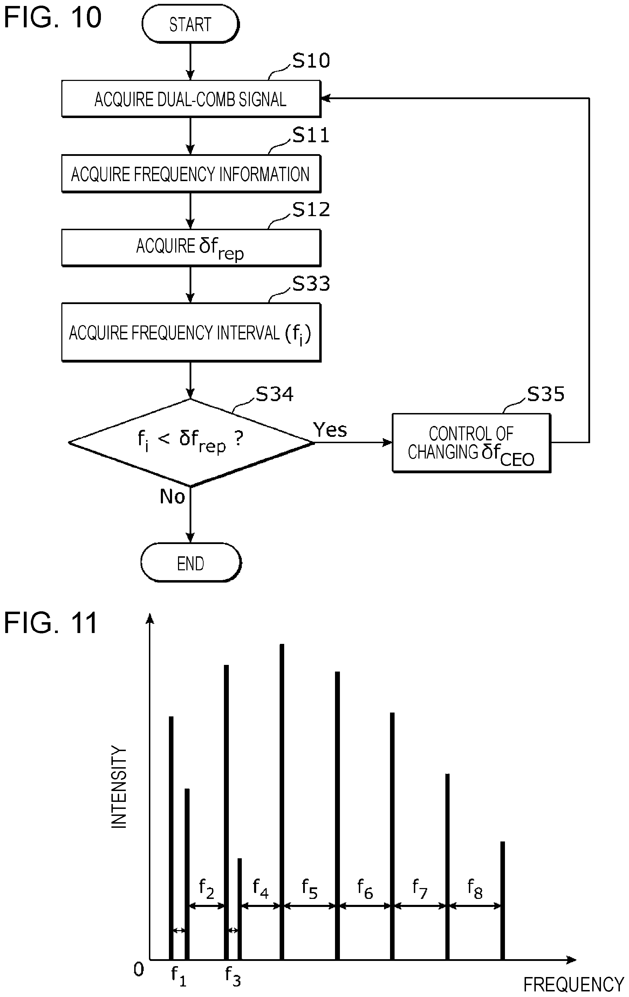

Next, an example of using a frequency interval is described with reference to Figs. 10 and 11.

Fig. 10 is a flowchart illustrating processing for controlling δf_{CEO} on the basis of a frequency interval in a frequency spectrum of a dual-comb signal in the operation of the laser device 100 according to the present embodiment.

In the processing illustrated in Fig. 10, control is performed so that aliasing does not occur. If the frequency spectrum is folded due to aliasing, occurrence of a frequency interval smaller than δfᵣₑₚ in the frequency spectrum is used, as illustrated in Fig. 11.

The laser device 100 starts operation upon receipt of a start signal from the input unit (not illustrated). Steps S10, S11, and 12 are similar to those illustrated in Fig. 6, and therefore description thereof is omitted.

### (Step S33)

In step S33, the control circuit 90 acquires third information concerning a frequency interval of the frequency spectrum acquired in step S11. The third information is a frequency interval fᵢ of all frequency modes of the frequency spectrum. For example, the control circuit 90 can detect fᵢ by performing peak detection on the frequency spectrum. However, another method may be used as long as fᵢ can be detected. Next, step S34 is performed. Note that the suffix i of fᵢ represents a number of the frequency interval. For example, in a case where the number of frequency modes is N, i is greater than or equal to 1 and less than or equal to N - 1.

### (Step S34)

In step S34, the control circuit 90 determines, for each i = 1 to N - 1, whether or not fᵢ is smaller than δfᵣₑₚ. In a case where at least one fᵢ is smaller than δfᵣₑₚ in step S34, that is, in a case of Yes in step S34, step S35 is performed. On the other hand, in a case where there is no fᵢ smaller than δfᵣₑₚ in step S34, that is, in a case of No in step S34, control of δf_{CEO} based on the frequency interval is finished. In the case of No in step S34, δf_{CEO} need not be changed.

### (Step S35)

In step S35, the control circuit 90 changes δf_{CEO} by controlling at least one of f_{CEO1} of the first optical comb laser 10 or f_{CEO2} of the second optical comb laser 20. For example, the control circuit 90 changes at least one of f_{CEO1} or f_{CEO2} by adjusting output of an excitation source of the first optical comb laser 10 or the second optical comb laser 20. However, another method such as control using an AOM may be used as long as the value of f_{CEO1} or f_{CEO2} can be changed. The processing returns to step S10 after δf_{CEO} is changed, and the above processing is repeated. Fig. 11 illustrates an example in which aliasing is occurring in the frequency spectrum, as in Fig. 7. As illustrated in Fig. 11, frequency intervals between adjacent frequency modes are represented by f₁ to f₈. Each of f₁, f₂, f₃, and f₄ is smaller than δfᵣₑₚ due to occurrence of aliasing (Yes in step S34), and therefore the control circuit 90 changes δf_{CEO} by changing the value of f_{CEO1} or f_{CEO2}. An amount by which δf_{CEO} is changed is adjusted as appropriate.

In Fig. 11, the suffix i is allocated in an ascending order of frequency. Accordingly, as illustrated in Fig. 11, in a case where fᵢ whose i is small is smaller than δfᵣₑₚ, aliasing whose boundary is a value of 0 is occurring. Therefore, the control circuit 90 need just increase δf_{CEO}. On the other hand, in a case where fᵢ whose i is large is smaller than δfᵣₑₚ, aliasing whose boundary is a value of Fₘₐₓ is occurring (see Fig. 9). Therefore, the control circuit 90 need just decrease δf_{CEO}.

In this way, the processing for changing δf_{CEO} is repeated until the frequency spectrum entirely falls within the response frequency band, that is, until fᵢ < δfᵣₑₚ ceases to be satisfied. This can suppress occurrence of aliasing.

### [Use of Lowest Frequency Mode, Highest Frequency Mode, and Frequency Interval]

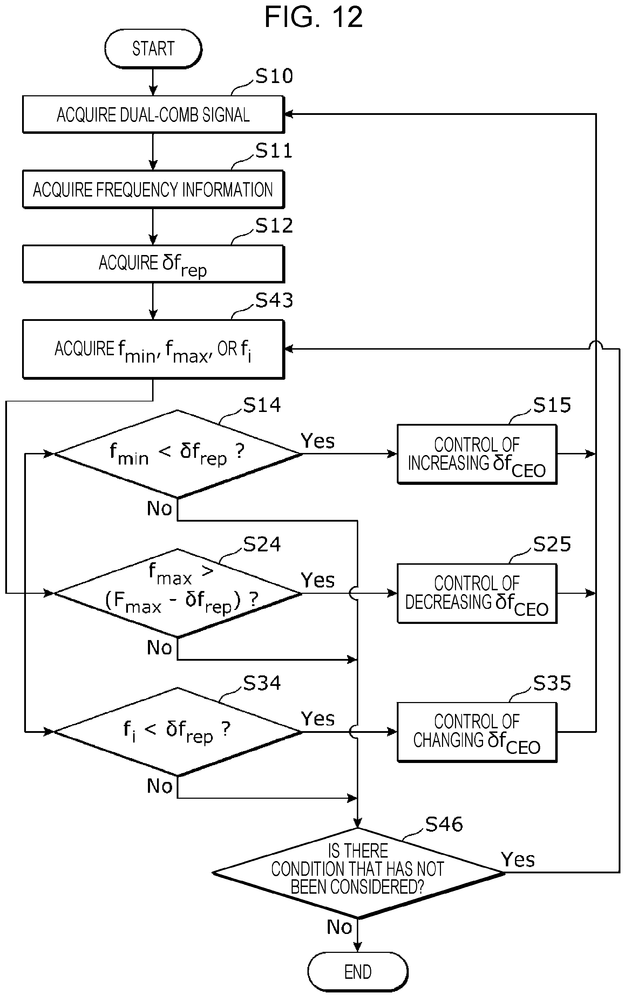

Next, an example of using the lowest frequency mode, the highest frequency mode, and the frequency interval is described with reference to Fig. 12. That is, the control circuit 90 may combine the processing illustrated in Figs. 6, 8, and 10.

The laser device 100 starts operation upon receipt of a start signal from the input unit (not illustrated). Steps S10, S11, and S12 are similar to those illustrated in Fig. 6, and therefore description thereof is omitted.

### (Step S43)

In step S43, the control circuit 90 acquires the mode frequency fₘᵢₙ of the lowest frequency mode, the mode frequency fₘₐₓ of the highest frequency mode, or the frequency interval fᵢ of the frequency spectrum acquired in step S11. For example, the control circuit 90 can detect fₘᵢₙ, fₘₐₓ, and fᵢ by performing peak detection on the frequency spectrum. However, another method may be used as long as fₘᵢₙ, fₘₐₓ, and fᵢ can be detected. Next, step S14 is performed in a case where fₘᵢₙ is detected, step S24 is performed in a case where fₘₐₓ is detected, and step S34 is performed in a case where fᵢ is detected. The processes in steps S14, S24, and S34 are identical to those illustrated in Figs. 6, 8, and 10. The same applies to steps S15, S25, and S35.

### (Step S46)

In a case of No in step S14, S24, or S34, that is, in a case where the condition in the step is not satisfied, the control circuit 90 determines whether or not there is a condition that has not been considered. In a case where there is a condition that has not been considered, that is, in a case of Yes in step S46, the processing returns to step S43, and fₘᵢₙ, fₘₐₓ, or fᵢ concerning the condition that has not been considered is acquired. For example, in a case where fₘᵢₙ is acquired in step S43 and fₘᵢₙ < δfᵣₑₚ is not satisfied (No in S14), fₘₐₓ or fᵢ is acquired when the processing returns to step S43. In a case where all conditions have been considered, that is, in a case of No in step S46, the control circuit 90 ends control of δf_{CEO}.

Note that although an example in which a case where the lowest frequency mode is used, a case where the highest frequency mode is used, and a case where the frequency interval is used are sequentially performed has been illustrated in Fig. 12, this is not restrictive. The control circuit 90 may concurrently perform at least two of the cases.

### [Use of Accuracy of Distance]

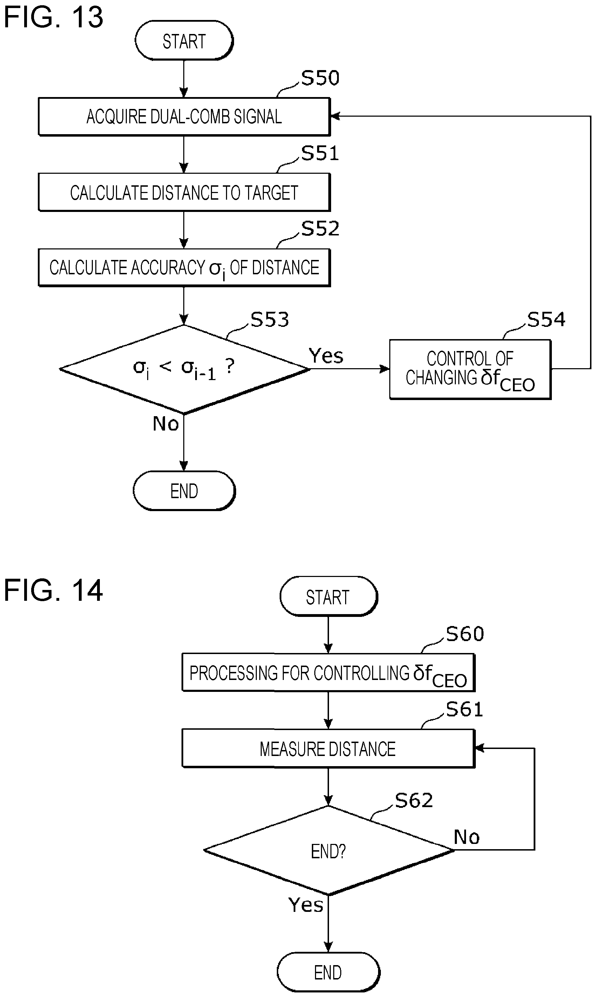

Next, an example of using accuracy of a distance to the target 60 is described with reference to Fig. 13.

Fig. 13 is a flowchart illustrating an example of processing for controlling δf_{CEO} on the basis of accuracy of a distance calculated from a dual-comb signal in the operation of the laser device 100 according to the present embodiment.

**In** the processing illustrated in Fig. 13, control is performed so that accuracy is improved in a result of distance measurement without considering aliasing. Since distance measurement information output in actual measurement is used for control, a computation cost for control can be reduced, and control can be speedily performed.

The laser device 100 starts operation upon receipt of a start signal from the input unit (not illustrated).

### (Step S50)

**In** step S50, the signal processing circuit 80 acquires dual-comb signals detected by the detectors 71 and 72. The dual-comb signals acquired here are time information of a pulse sequence such as the one illustrated in Fig. 1. Next, step S51 is performed.

### (Step S51)

In step S51, the signal processing circuit 80 calculates a distance to the target 60 by performing arithmetic processing while using the dual-comb signal output from the detector 71 as a reference signal and using the dual-comb signal output from the detector 72 as a measurement signal. One example of a distance calculation method is a method of finding a distance from a pulse peak difference between the reference signal and the measurement signal. However, another method such as distance calculation using phase information after Fourier transform may be used as long as a distance can be found. Next, step S52 is performed.

### (Step S52)

In step S52, the control circuit 90 calculates accuracy σᵢ of the distance calculated in step S51. For example, the control circuit 90 calculates, as the accuracy σᵢ, a standard deviation of several tens of measurement results. However, another method may be used as long as the accuracy σᵢ can be calculated. Next, step S53 is performed.

### (Step S53)

In step S53, the control circuit 90 determines whether or not the accuracy σᵢ calculated in step S52 is larger than previous accuracy σ_{i - 1}. In this example, a smaller value of the accuracy σᵢ means higher accuracy, that is, a smaller error between a measurement result of a distance and an actual distance. In a case where σᵢ is larger than σ_{i - 1} in step S53, that is, in a case of Yes in step S53, step S54 is performed. On the other hand, in a case where σᵢ is smaller than σ_{i - 1} in step S53, that is, in a case of No in step S53, control of δf_{CEO} based on accuracy of a distance is finished. In a case of No in step S53, δf_{CEO} need not be changed.

### (Step S54)

In step S54, the control circuit 90 changes δf_{CEO} by controlling at least one of f_{CEO1} of the first optical comb laser 10 or f_{CEO2} of the second optical comb laser 20. For example, the control circuit 90 changes at least one of f_{CEO1} or f_{CEO2} by adjusting output of an excitation source of the first optical comb laser 10 or the second optical comb laser 20. However, another method such as control using an AOM may be used as long as the value of f_{CEO1} or f_{CEO2} can be changed. The processing returns to step S50 after δf_{CEO} is changed, and the above processing is repeated.

In this way, the processing for changing δf_{CEO} is repeated until improvement of accuracy of the distance does not proceed, that is, σᵢ < σ_{i - 1} ceases to be satisfied. This can sufficiently improve accuracy of the distance.

Note that although the accuracy σᵢ and the previous accuracy σ_{i - 1} are compared in Fig. 13, this is not restrictive. The control circuit 90 may compare the accuracy σᵢ and a predetermined threshold value.

Furthermore, processing of calculating the accuracy σᵢ every time δf_{CEO} is changed may be performed a predetermined number of times, and the calculated accuracy σᵢ and a control condition at the time may be stored in association. The control circuit 90 may decides highest accuracy σᵢ among the values of the accuracy σᵢ calculated the predetermined number of times and decide a control condition at the time as a control condition of the first optical comb laser 10 and the second optical comb laser 20.

### [Timing of Control of δf_{CEO}]

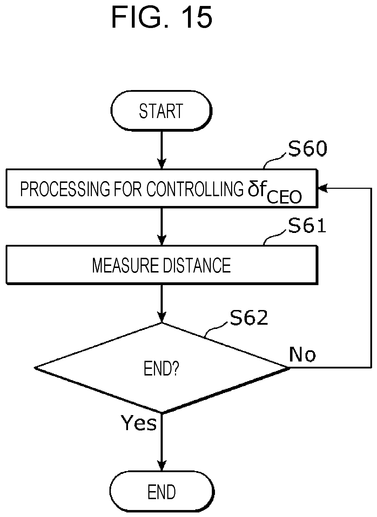

Next, a timing of the control of δf_{CEO} is described with reference to Figs. 14 and 15. There are two patterns of controlling δf_{CEO} in a case where a distance is actually measured, that is, a case where the control is performed as calibration before measurement and a case where the control is performed as occasional feedback.

### [Calibration]

Fig. 14 is a flowchart illustrating an example of processing for controlling δf_{CEO} as calibration before measurement in the operation of the laser device 100 according to the present embodiment.

The laser device 100 starts operation upon receipt of a start signal from the input unit (not illustrated).

### (Step S60)

In step S60, the control circuit 90 controls δf_{CEO} so that the frequency spectrum of the dual-comb signal falls within the response frequency band of each of the detectors 71 and 72 before actual measurement of a distance. A specific control method is similar to the processing illustrated in Figs. 6, 8, 10, 12, and 13, and therefore description thereof is omitted. Next, step S61 is performed. In the example illustrated in Fig. 14, the processing for controlling δf_{CEO} is not performed thereafter.

### (Step S61)

In step S61, a distance to the target 60 is measured on the basis of signals output from the detectors 71 and 72. A specific distance measurement method is similar to step S51 of Fig. 13, and therefore description thereof is omitted.

### (Step S62)

In step S62, it is determined whether or not measurement of a distance is finished. Specifically, the signal processing circuit 80 or the control circuit 90 determines whether or not an end signal is input from the input unit (not illustrated). In a case where measurement is finished in step S62, that is, in a case of Yes in step S62, measurement of a distance is finished. On the other hand, in a case where measurement continues in step S62, that is, in a case of No in step S62, step S61 is performed.

In this way, the distance to the target 60 can be repeatedly measured on the basis of the initially set δf_{CEO}. It is therefore possible to, for example, measure a surface shape of the target 60 and measure a traveling speed of the target 60. Since δf_{CEO} is not controlled during actual measurement, a computation amount decreases, and the distance can be measured in a short time. It is therefore possible to measure the distance to the target 60, the traveling speed of the target 60, and the like with high accuracy even in a case where the target 60 moves fast.

### [Feedback]

Fig. 15 is a flowchart illustrating an example of processing for controlling δf_{CEO} as feedback during measurement in the operation of the laser device 100 according to the present embodiment.

As illustrated in Fig. 15, steps S61 and S61 are similar to those illustrated in Fig. 14, and therefore description thereof is omitted. Fig. 15 is different in that step S62 is performed again in a case of No in step S62. That is, the control circuit 90 changes δf_{CEO} while calculating the distance by the signal processing circuit 80. Specifically, the laser device 100 repeatedly performs control of δf_{CEO} in step S60 and measurement of a distance in step S61.

δf_{CEO} sometimes changes due to disturbance such as a temperature change during repeated measurement of a distance. As illustrated in Fig. 15, the change of δf_{CEO} during measurement can be coped with by adjusting δf_{CEO} as needed, that is, by performing feedback. This can increase accuracy of measurement.

### (Other Embodiments)

Although the laser device according to one or more aspects has been described on the basis of the embodiment, the present disclosure is not limited to the embodiment. Various modifications of the present embodiment which a person skilled in the art can think of and other embodiments constructed by combining constituent elements in different embodiments and examples are also encompassed within the present disclosure without departing from the spirit of the present disclosure.

For example, in the above embodiment, a process performed by a specific processing unit may be performed by another processing unit. Furthermore, an order of plural processes may be changed and plural processes may be performed in parallel.

Furthermore, for example, the processing described in the above embodiment may be realized by centralized processing using a single device (system) or may be realized by decentralized processing using plural devices. Furthermore, the above program may be executed by a single processor or may be executed by plural processors. That is, centralized processing may be performed or decentralized processing may be performed.

In the above embodiment, all or a part of any of the constituent elements such as the signal processing circuit 80 and the control circuit 90 may be constituted by dedicated hardware or may be realized by execution of a software program suitable for the constituent element. Each of the constituent elements may be realized by reading out and executing a software program stored in a recording medium such as a hard disk drive (HDD) or a semiconductor memory by a program execution unit such as a central processing unit (CPU) or a processor.

Furthermore, each of the constituent elements such as the signal processing circuit 80 and the control circuit 90 may be constituted by one or more electronic circuits. The one or more electronic circuits may each be a general-purpose circuit or may be a dedicated circuit.

The one or more electronic circuits may include, for example, a semiconductor device, an IC or an LSI. The IC or LSI may be integrated into one chip or may be integrated into plural chips. The name used here is IC or LSI, but it may also be called system LSI, very large scale integration (VLSI), or very large scale integration (ULSI) depending on the degree of integration. An FPGA that can be programmed after manufacturing an LSI can be used for the same purpose.

General or specific aspects of the present disclosure may be implemented as a system, a device, a method, an integrated circuit, or a computer program or may be implemented as a computer-readable non-transitory recording medium such as an optical disc, an HDD, or a semiconductor memory in which the computer program is stored. Alternatively, general or specific aspects of the present disclosure may be implemented as any combination of a system, a device, a method, an integrated circuit, a computer program, and a recording medium.

### (Other Remarks)

A modification of the embodiment of the present disclosure may be as follows.

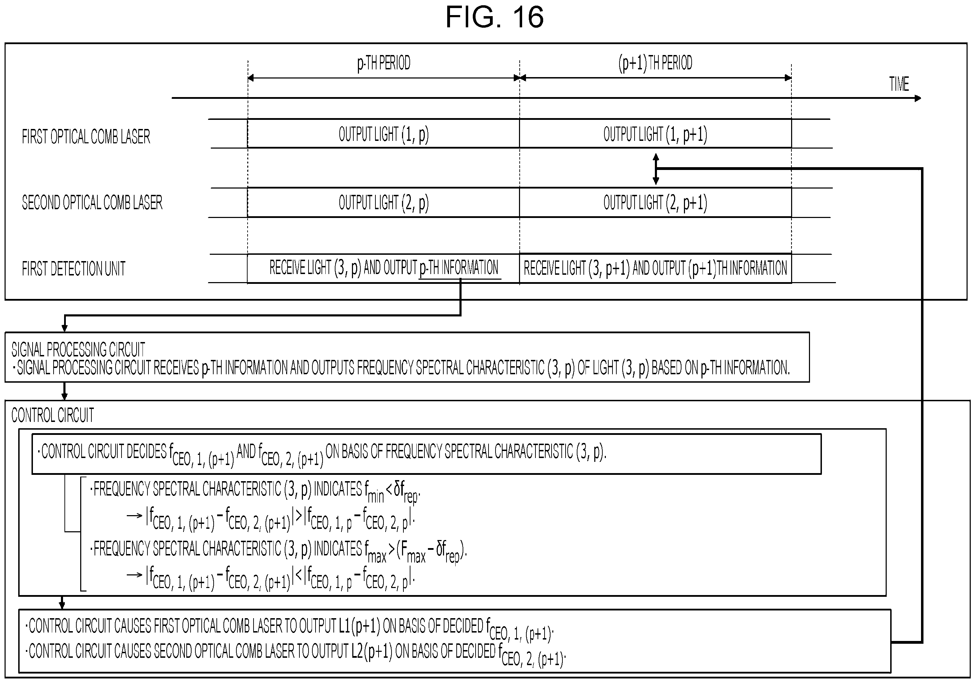

Fig. 16 illustrates a flow of processing of the modification.

A laser device according to a first item includes a first optical comb laser, a second optical comb laser, a detection unit, and a control circuit, in which the control circuit causes the first optical comb laser to output light (1, p) in a p-th period, the control circuit causes the second optical comb laser to output light (2, p) in the p-th period, the detection unit receives light (3, p) based on the light (1, p) and the light (2, p), the detection unit outputs p-th information corresponding to the light (3, p), f_{1, n, p} = f_{CEO, 1, p} + n × f_{rep, 1,} f_{2, n, p} = f_{CEO, 2, p} + n × f_{rep, 2} where f_{1, n, p} is a light frequency of an n-th mode in a frequency spectral characteristic (1, p) of the light (1, p), f_{2, n, p} is a light frequency of an n-th mode in a frequency spectral characteristic (2, p) of the light (2, p), f_{CEO, 1, p} is a frequency corresponding to a 0-th mode in the frequency spectral characteristic (1, p), and f_{CEO, 2, p} is a frequency corresponding to a 0-th mode in the frequency spectral characteristic (2, p), f_{rep, 1} and f_{rep, 2} are different, and the control circuit decides f_{CEO,1, (p + 1)} and f_{CEO,2, (p + 1)} on the basis of a frequency spectral characteristic (3, p) of the light (3, p) based on the p-th information.

The light (1, p) may be laser light output in the p-th period by the first optical comb laser 10.

The light (2, p) may be laser light output in the p-th period by the second optical comb laser 20.

The light (3, p) may be light that is based on the light (1, p) and the light (2, p) and received from the coupler 32 by the detector 32.

The p-th period may start at a time tₚ and end at a time t(_{p + 1)}.

The control circuit may cause the first optical comb laser to end the output of the light (1, p) at a time later than the time tₚ and earlier than the time t_{(p + 1)}.

The time at which the output of the light (1, p) ends may be a time later than the time tₚ and earlier than the time t_{(p + 1)}.

The control circuit may cause the second optical comb laser to end the output of the light (2, p) at a time later than the time tₚ and earlier than the time t_{(p + 1)}.

The time at which the output of the light (2, p) ends may be a time later than the time tₚ and earlier than the time t_{(p + 1)}.

In the laser device according to the first item, the laser device according to a second item is configured such that the frequency spectral characteristic (3, p) exhibits fₘᵢₙ < δfᵣₑₚ, and |f_{CEO, 1, (p + 1)} - f_{CEO, 2, (p + 1)}| > |f_{CEO, 1 ,p} - f_{CEO, 2, p}| where fₘᵢₙ is a wavelength corresponding to a lowest frequency mode among plural frequency modes in the frequency spectral characteristic (3, p) and δfᵣₑₚ is an absolute value of a difference between two frequencies corresponding to two adjacent frequency modes in the frequency spectral characteristic (3, p).

In the laser device according to the first item, the laser device according to a third item is configured such that the frequency spectral characteristic (3, p) exhibits fₘₐₓ > (Fₘₐₓ - δfᵣₑₚ), and |f_{CEO, 1, (p + 1)} - f_{CEO, 2, (p + 1})| < |f_{CEO,1, p} - f_{CEO, 2, p}| where fₘₐₓ is a wavelength corresponding to a highest frequency mode among plural frequency modes in the frequency spectral characteristic (3, p), Fₘₐₓ is a highest frequency included in a frequency band that can be detected by the detection unit, and δfᵣₑₚ is an absolute value of a difference between two frequencies corresponding to two adjacent frequency modes in the frequency spectral characteristic (3, p).

In the above embodiment, various changes, substitutions, additions, omissions, and the like can be made within the claims and the scope equivalent to the claims.

### Industrial Applicability

The present disclosure is applicable to a device, a system, a method, or the like for distance measurement, displacement measurement, or the like, and is, for example, applicable to a distance measurement sensor, a displacement gauge, a shape inspection device, or the like.

### Reference Signs List

10 first optical comb laser
10L first optical comb laser light
10Lr,10Lt,20Lr,20Lt light
10R reflected light
20 second optical comb laser
20L second optical comb laser light
30,31,32,33 coupler
40 circulator
50 collimator
60 target
70 detection unit
71,72 detector
80 signal processing circuit
90 control circuit
100 laser device

## Claims

1. A laser device comprising:
a first optical comb laser;
a second optical comb laser having a repetition frequency different from the first optical comb laser;
a detection unit that detects interfering light between light output from the first optical comb laser and light output from the second optical comb laser; and
a control circuit, wherein
the control circuit controls at least one of a first CEO frequency, which is a carrier-envelope offset frequency of the first optical comb laser, or a second CEO frequency, which is a carrier-envelope offset frequency of the second optical comb laser, on a basis of output of the detection unit and thus changes a difference frequency, which is a difference between the first CEO frequency and the second CEO frequency.

2. The laser device according to claim 1, wherein
the control circuit acquires first information concerning a lowest frequency mode of a frequency spectrum of the interfering light on a basis of the output of the detection unit and increases the difference frequency by using the acquired first information.

3. The laser device according to claim 1, wherein
the control circuit acquires second information concerning a highest frequency mode of a frequency spectrum of the interfering light on a basis of the output of the detection unit and decreases the difference frequency by using the acquired second information.

4. The laser device according to claim 1, wherein
the control circuit acquires third information concerning a frequency interval of a frequency spectrum of the interfering light on a basis of the output of the detection unit and changes the difference frequency by using the acquired third information.

5. The laser device according to any one of claims 1 to 4, further comprising a signal processing circuit that calculates a distance to a target on a basis of output of the detection unit, wherein
the detection unit detects interfering light between light output from the first optical comb laser and reflected by the target and light output from the second optical comb laser.

6. The laser device according to claim 5, wherein
the control circuit changes the difference frequency on a basis of accuracy of the distance calculated by the signal processing circuit.

7. The laser device according to claim 5, wherein
the control circuit changes the difference frequency before the calculation of the distance.

8. The laser device according to claim 5, wherein
the control circuit changes the difference frequency while calculating the distance.
